# EUROPÄISCHE PATENTANMELDUNG

(11) **EP 2 728 477 A1**
(43) Veröffentlichungstag der Anmeldung: **07.05.2014**
(21) Anmeldenummer: 12191210.9
(22) Anmeldetag: 05.11.2012
(51) Int. Cl.: G06F 11/10, G06F 11/16

(54) **Verfahren und Logikschaltung zum Kopieren von Daten, Speichervorrichtung und Datenverarbeitungsvorrichtung**

(71) Anmelder: Siemens Aktiengesellschaft, 80333 München (DE)
(72) Erfinder: Graf, Rene, 90443 Nürnberg (DE)

(57) **Zusammenfassung**

Verfahren und Logikschaltung zum Kopieren von Daten, Speichervorrichtung und Datenverarbeitungsvorrichtung

Zum Kopieren von Daten umfasst ein Verfahren (100) folgende Schritte, wobei der zweite Verfahrensschritt zeitgleich mit dem dritten Verfahrensschritt durchgeführt wird und der dritte Verfahrensschritt wiederholt wird, bis zu Beginn des dritten Verfahrensschritts kein Markierungsbit (44) mehr den zweiten Binärwert aufweist:
- Bereitstellen (110) eines ersten Datenspeichers (14), in dessen Speicherworten (41) ein Markierungsbit (44) vorgesehen ist;
- Durchführen eines Schreibzugriffs (120) auf ein Speicherwort (41) des ersten Datenspeichers (14), wobei das Markierungsbit (44) auf den zweiten Binärwert gesetzt wird;
- Kopieren (130) aller Datenworte (42) des ersten Datenspeichers (14), zu denen das Markierungsbit (44) den zweiten Binärwert aufweist, in die Datensenke (30'), wobei das Markierungsbit (44) auf den ersten Binärwert gesetzt wird (132).

Außerdem wird eine entsprechende Logikschaltung (50), eine Speichervorrichtung (60) und eine Datenverarbeitungsvorrichtung (30) vorgeschlagen.

## Beschreibung

Die Erfindung betrifft ein Verfahren zum Kopieren von Daten aus einem ersten Datenspeicher in eine Datensenke.

Außerdem betrifft die Erfindung ein Verfahren zum Markieren von beschriebenen Speicherworten.

Darüberhinaus betrifft die Erfindung eine Logikschaltung, eine Speichervorrichtung, die einen ersten Datenspeicher und eine Speicherverwaltungseinheit umfasst, und eine Datenverarbeitungsvorrichtung, die einen Prozessor umfasst.

Für den Anlauf einer gedoppelten Datenverarbeitungseinrichtung ist ein Anlaufverfahren bekannt, in dem zunächst die erste Datenverarbeitungseinrichtung und erst dann die zweite Datenverarbeitungseinrichtung in Betrieb genommen wird. Die Inbetriebnahme der zweiten Datenverarbeitungseinrichtung durchläuft typischerweise folgende zwei Phasen. In einer ersten Phase wird die zweite Datenverarbeitungseinrichtung an die erste Datenverarbeitungseinrichtung angekoppelt. Dabei werden aus der ersten Datenverarbeitungseinrichtung alle nichtveränderlichen Daten (beispielsweise Programmcode) übertragen. In einer zweiten Phase wird ein Aufdaten der zweiten Datenverarbeitungseinrichtung mit veränderlichen Daten aus einem Arbeitsspeicher der ersten Datenverarbeitungseinrichtung durchgeführt. ziel des Aufdatens ist es, dass die zweite Datenverarbeitungseinrichtung nach dem Aufdaten zum gleichen Zeitpunkt einen exakt selben zustand eingenommen hat wie die erste Datenverarbeitungseinrichtung. Dies betrifft insbesondere eine Übereinstimmung der Arbeitsspeicher der beiden Datenverarbeitungseinrichtungen. Bei ungestörtem Betrieb entwickeln beide Datenverarbeitungseinrichtungen ihre jeweiligen Zustände synchron und in identischer weise weiter, so dass sich die Arbeitsspeicher beider Datenverarbeitungseinrichtungen nach dem Aufdaten zwar laufend verändern, aber trotzdem zu jedem Zeitpunkt genau überstimmen.

In Anwendungen, die eine hohe Verfügbarkeit fordern, besteht die Schwierigkeit, dass die erste Datenverarbeitungseinrichtung für das Aufdaten der zweiten Datenverarbeitungseinrichtung nicht für eine so lange Zeit angehalten werden darf, bis die veränderlichen Daten aus dem Arbeitsspeicher der ersten Datenverarbeitungseinrichtung vollständig in den Arbeitsspeicher der zweiten Datenverarbeitungseinrichtung kopiert wurden.

Der Erfindung liegt die Aufgabe zugrunde, ein Verfahren bereitzustellen, mit dem ein Kopieren der veränderlichen Daten aus dem Arbeitsspeicher der ersten Datenverarbeitungseinrichtung in den Arbeitsspeicher der zweiten Datenverarbeitungseinrichtung vollständig, fehlerfrei und zeitsparend durchgeführt werden kann.

Erfindungsgemäß wird diese Aufgabe dadurch gelöst, dass ein Verfahren zum Kopieren von Daten aus einem ersten Datenspeicher in eine Datensenke bereitgestellt wird, das das folgende drei Schritte umfasst, wobei der zweite Verfahrensschritt zeitgleich mit dem dritten Verfahrensschritt durchgeführt wird und der dritte Verfahrensschritt wiederholt wird, bis zu Beginn des dritten Verfahrensschritts kein Markierungsbit eines Speicherworts des ersten Datenspeichers mehr einen zweiten Binärwert aufweist:
- Bereitstellen eines ersten Datenspeichers, in dessen Speicherworten neben von Anwendungen nutzbaren Datenbits und einem oder mehreren eventuellen Prüfbits ein Markierungsbit vorgesehen ist;
- Durchführen mindestens eines Schreibzugriffs auf mindestens ein Speicherwort des ersten Datenspeichers, wobei das Markierungsbit des Speicherworts, auf das der Schreibzugriff erfolgt, auf den zweiten Binärwert gesetzt wird; und
- Kopieren aller Datenworte der Speicherworte des ersten Datenspeichers, in denen das Markierungsbit den zweiten Binärwert aufweist, in die Datensenke, wobei das Markierungsbit jedes Speicherworts, auf das der Kopierzugriff erfolgt, auf den ersten Binärwert gesetzt wird, der zu dem zweiten Binärwert invers ist, wobei gewährleistet ist, dass zwischen dem Kopieren des Datenworts des Speicherworts, auf das der Kopierzugriff erfolgt, und dem Setzen des Markierungsbits auf den ersten Binärwert kein Schreibzugriff erfolgt.

In Bezug auf das Verfahren zum Markieren von beschriebenen Speicherworten wird die Aufgabe dadurch gelöst, dass das Verfahren folgende Schritte umfasst:
- Bereitstellen eines ersten Datenspeichers, in dessen Speicherworten neben von Anwendungen nutzbaren Datenbits und einem oder mehreren eventuellen Prüfbits ein Markierungsbit vorgesehen ist;
- Setzen des Markierungsbits aller Speicherworte des ersten Datenspeichers auf einen ersten Binärwert; und
- Durchführen mindestens eines Schreibzugriffs auf mindestens ein Speicherwort des ersten Datenspeichers, wobei das Markierungsbit des Speicherworts, auf das der Schreibzugriff erfolgt, auf einen zweiten Binärwert gesetzt wird, der zu dem ersten Binärwert invers ist.

Der erste Binärwert kann eine logische Eins sein, dann ist der zweite Binärwert eine logische Null, oder umgekehrt. Die Prüfbits können Bits zur Fehlererkennung und/oder Fehlerkorrektur sein, wie sie beispielsweise bei ECC-Speichern üblich sind (*ECC = Error Checking and Correction*)*.*

In Bezug auf die Logikschaltung wird die Aufgabe dadurch gelöst, dass die Logikschaltung zur Durchführung des erfindungsgemäßen Verfahrens vorbereitet ist. Die Speichervorrichtung ist dadurch erfindungsgemäß weiterentwickelt, dass sie eine erfindungsgemäße Logikschaltung umfasst. Entsprechend umfasst die erfindungsgemäße Datenverarbeitungsvorrichtung eine erfindungsgemäße Speichervorrichtung.

Dadurch, dass in den Speicherworten zusätzlich zu Datenbits, die von Anwendungen genutzt werden und einem oder mehreren eventuellen Prüfbits ein Markierungsbit vorgesehen ist, kann die Information, dass ein bestimmtes Speicherwort oder ein bestimmter Speicherbereich während des Aufdatens beschrieben wurde, in dem Speicherwort selbst gespeichert werden. Dies erleichtert einen kostengünstigen, hardwarenahen Aufbau einer Speicherverwaltung, die ein zeiteffizientes, fehlerfreies Aufdaten mit minimaler Behinderung des schon laufenden ersten Prozessors ermöglicht. Das Ausführen eines Programms im ersten Prozessor und das Aufdaten des zweiten Datenspeichers kann auch dann fehlerfrei erfolgen, wenn der Zugriff des ersten Prozessors und das Aufdaten unkoordiniert und mitunter sogar zeitgleich erfolgt.

Eine bevorzugte Weiterbildung sieht vor, dass vor dem Durchführen eines ersten Schreibzugriffs folgender Schritt durchgeführt wird: Kopieren aller Datenworte (Nutzdaten) der Speicherworte des ersten Datenspeichers ohne Rücksicht auf den zustand der Markierungsbits. Hierdurch kann sichergestellt werden, dass die Nutzdaten jedes Speicherworts des ersten Datenspeichers mindestens einmal kopiert werden, ohne dass im weiteren Ablauf das (unter Umständen nur schwer zu erfüllende) Erfordernis auftritt, eine Vielzahl von Markierungsbits quasi gleichzeitig zu setzen oder zurückzusetzen.

Eine alternative Weiterbildung sieht vor, dass vor dem Durchführen eines ersten Schreibzugriffs folgender Schritt durchgeführt wird: Setzen des Markierungsbits aller Speicherworte des ersten Datenspeichers auf den zweiten Binärwert. Dies ist eine zweite Möglichkeit, wie sichergestellt werden kann, dass auch die Inhalte solcher Speicherworte zu der Datensenke kopiert werden, auf die während des Aufdatens kein Schreibvorgang stattfindet.

Eine weitere alternative Weiterbildung sieht vor, dass vor dem Durchführen eines ersten Schreibzugriffs folgende Schritte durchgeführt werden: Setzen des Markierungsbits aller Speicherworte des ersten Datenspeichers auf den ersten Binärwert und Kopieren aller Datenworte der Speicherworte des ersten Datenspeichers, in denen das Markierungsbit den ersten Binärwert aufweist, in die Datensenke. Dies ist eine zweite Möglichkeit, wie sichergestellt werden kann, dass auch die Inhalte solcher Speicherworte zu der Datensenke kopiert werden, auf die während des Aufdatens kein Schreibvorgang stattfindet.

Es ist besonders bevorzugt, wenn der erste Datenspeicher Datenblöcke umfasst, wobei je Datenblock für alle Speicherworte des jeweiligen Datenblocks ein gemeinsames Markierungsbit vorgesehen ist. Das gemeinsame Markierungsbit kann für alle Adressen des Datenblocks dadurch angesprochen werden, dass bei einem Lesen oder Schreiben des Markierungsbits niedrigwertige Adressbits, die zwischen Speicherworten innerhalb eines selben Datenblocks unterscheiden, unberücksichtigt bleiben. Das gemeinsame Markierungsbit liegt dann typischerweise in dem Speicherwort mit der niedrigsten Adresse innerhalb des Datenblocks.

Übliche Speichertechnologien unterstützen ein gezieltes Schreiben in einzelne Bits typischerweise nicht. Daher kann es für das Aufdaten besonders leistungssteigernd sein, wenn der erste Datenspeicher eine Prüf- und Korrekturlogik aufweist, die das Setzen des Markierungsbits bei jedem Schreibvorgang zusammen mit dem Setzen der Prüf- und Korrekturbits gleich miterledigt.

Wenn alle Markierungsbits eines Speicherbereichs gleichzeitig gesetzt oder zurückgesetzt werden sollen, ist es grundsätzlich vorstellbar, dass von jedem Speicherwort des Speicherbereichs das Byte mit dem Markierungsbit einzeln in ein Register des Prozessors geladen wird, um das Markierungsbit dort zu manipulieren und das Byte mit dem Markierungsbit dann wieder an die Speicherstelle zurückzuschreiben. Hierzu müssten die Bytes mit den Markierungsbits über Eingabe-Ausgabe-Ports oder über die normale Busadressierung in einem eigenen Adressbereich und unter Umgehung einer eventuell vorhandenen ECC-Logik lesbar und schreibbar sein.

Eine hardwarenahe Möglichkeit, die hinsichtlich der Verarbeitungsgeschwindigkeit schneller sein kann, besteht darin, einen Latch vorzusehen, in den ein Byte des Speicherworts oder das ganze Speicherwort ausgelesen werden kann, in welchem das Markierungsbit auf seinen Sollwert gesetzt werden kann, um das Byte beziehungsweise das ganze Speicherwort mit sonst unverändertem Inhalt nach dem Setzen des Markierungsbits auf den Sollwert wieder in das Speicherwort zurückzuschreiben. Außerdem kann ein Adresszähler vorgesehen sein, mit dem diese Schritte zur Manipulation der Markierungsbits für jedes Speicherwort in einem vorgegebenen Adressbereich des ersten Datenspeichers durchgeführt werden.

Eine weitere hardwarenahe Möglichkeit besteht darin, zum gemeinsamen Setzen und/oder Rücksetzen der Markierungsbits einen zwischenspeicher vorzusehen, der die Besonderheit aufweist, dass dessen Datenleitung für das Markierungsbit beim Auslesen (beispielsweise mittels eines Ausgabe-Port) auf den zu setzenden Wert gesetzt ist. Der Datenbereich, dessen Markierungsbits zu manipulieren sind, kann dann in einem ersten Schritt mittels Speicherdirektzugriff (*Direct Memory Access* = *DMA*) zu dem Zwischenspeicher übertragen werden und in einem zweiten Schritt mittels DMA mit den gesetzten Markierungsbits in den ursprünglichen Speicherbereich zurückübertragen werden.

Zweckmäßig ist, wenn eine Verknüpfung eines Lese-Schreib-Signals mit einem Signal durchgeführt wird, das anzeigt, ob gerade ein Aufdaten durchgeführt wird. Das Ergebnissignal kann dazu genutzt werden, beim Lesen eines Speicherworts (beispielsweise in einer erweiterten ECC-Logik) ein Rücksetzen des Markierungsbits nur dann zu bewirken, wenn der Lesevorgang zu einem Aufdatenvorgang gehört.

Die Erfindung ist anhand der beigefügten Zeichnungen näher erläutert, in denen zeigen:
- FIG 1: ein schematisches Blockschaltbild einer gedoppelten Datenverarbeitungsvorrichtung,
- FIG 2: ein schematisches Ablaufdiagram eines Verfahrens zum Kopieren von Daten aus einem ersten Datenspeicher in einen zweiten Datenspeicher, und
- FIG 3: ein schematisches Ablaufdiagram eines Verfahrens zum Markieren von beschriebenen Speicherworten.

Die nachfolgend näher geschilderten Ausführungsbeispiele stellen bevorzugte Ausführungsformen der vorliegenden Erfindung dar.

Bevor anhand der Figuren konkrete Ausführungsbeispiele erläutert werden, wird der Überblick über den Stand der Technik nun noch etwas vertieft.

Es gibt hochverfügbare speicherprogrammierte Steuerungen, die zwei zentralprozessoren umfassen, die mittels eines Lichtwellenleiters gekoppelt sind. Die beiden zentralprozessoren arbeiten ein Anwenderprogramm synchron ab, so dass beide zentralprozessoren identische Daten aufweisen. Die Daten liegen in sogenannten Datenbausteinen vor. Daten, die von außen kommen, werden kommunikationstechnisch auf beiden Teilsystemen zeitgleich aktualisiert. Der zustand der Synchronität wird nicht direkt nach Einschalten des Systems erreicht. Zunächst läuft nur ein erster der beiden zentralprozessoren an. Sobald der erste zentralprozessoren den zustand 'RUN' erreicht hat, kann der zweite zentralprozessor einen Prozess starten, der ihn auf den ersten Zentralprozessor aufsynchronisiert. Dabei läuft der erste Zentralprozessor ohne Einschränkung der Dynamik weiter.

Der Synchronisationsprozess erfolgt in zwei Phasen. In der ersten Phase, die mit 'Ankoppeln' bezeichnet wird, werden alle statischen Daten an den zweiten zentralprozessor übertragen. Zu den statischen Daten, die sich im laufenden Betrieb nicht ändern, zählen der Programmcode sowie Konfigurationsdaten. Die Möglichkeit, das Programm oder die Konfiguration im laufenden Betrieb zu ändern, wird solange abgeschaltet, bis der synchrone zustand erreicht ist. Zu den Konfigurationsdaten zählen auch Kommunikationsverbindungen und die Anbindung der Peripherie. Nach Abschluss der ersten Phase sind alle Kommunikationsverbindungen doppelt aufgebaut und alle Daten, die von außen kommen, werden synchron an beide Zentralprozessoren übertragen. In der Gegenrichtung ist zu diesem Zeitpunkt nach wie vor nur der erste Zentralprozessor aktiv, der die Anwendung (beispielsweise einen Automatisierungsprozess) steuert.

In der zweiten Phase, die mit 'Aufdaten' bezeichnet wird, werden die eigentlichen Daten von dem laufenden Zentralprozessor an die ankoppelnde Datenverarbeitungsvorrichtung übertragen. Dieser Vorgang kann nicht in einem Zug erfolgen, da der laufende Zentralprozessor nicht angehalten werden kann. Stattdessen wird ein iterativer Prozess durchlaufen, bei dem immer nur die Daten an den anderen zentralprozessor übertragen werden, die sich seit dem letzten Abgleich geändert haben.

Die Übertragung aller statischen und dynamischen Daten erfolgt über die Lichtwellenleiterkopplung, die als Sync-Kopplung bezeichnet wird. Entsprechend der beschriebenen Schritte wird der gesamte Prozess mit 'Ankoppeln und Aufdaten' oder als AuA-Sequenz bezeichnet. Um das Aufdaten zu beschleunigen oder überhaupt zu ermöglichen, ist es erforderlich, in möglichst kurzer Zeit zu erkennen, welche Daten seit der letzten Synchronisation verändert wurden.

Im Folgenden wird ein alternatives Konzept erläutert, das eine hardwarenahe Realisierung fördert und mit dem bei großen Datenmengen eine zeit für das Aufdaten in einem akzeptablen Rahmen gehalten werden kann.

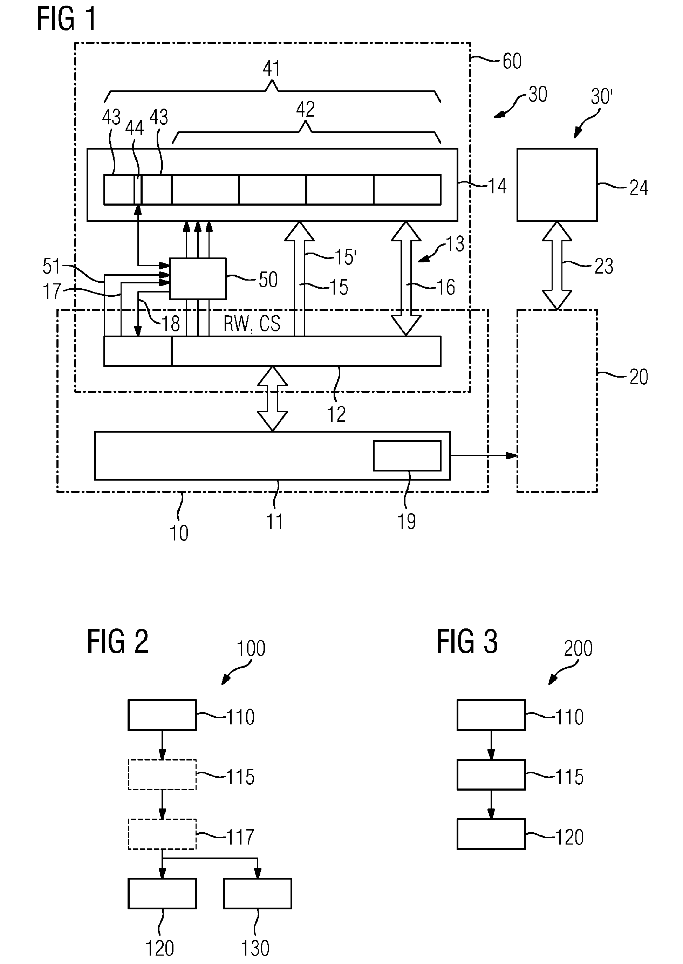

Die FIG 1 zeigt eine gedoppelte Datenverarbeitungsvorrichtung 30, 30' einer hochverfügbaren speicherprogrammierten Steuerung. Eine erste Datenverarbeitungsvorrichtung 30 der gedoppelten Datenverarbeitungsvorrichtung 30, 30' umfasst einen ersten Controller 10 und einen ersten Datenspeicher 14. Der erste Controller 10 umfasst einen ersten Prozessor 11 und eine Speicherverwaltungseinheit 12. Außerdem ist am ersten Controller 10 ein erster Busanschluss 13 zum Anschluss eines ersten Datenspeichers 14 vorgesehen (Adressleitungen 15, Datenleitungen 16). Eine zweite Datenverarbeitungsvorrichtung 30' der gedoppelten Datenverarbeitungsvorrichtung 30, 30' umfasst einen zweiten Controller 20 und einen zweiten Datenspeicher 24. Am zweiten Controller 20 ist ein zweiter Busanschluss 23 zum Anschluss des zweiten Datenspeichers 24 vorgesehen.

Teil des ersten Controllers 10 ist eine Speicherverwaltungseinheit 12, die logische zugriffe auf eine Adresse in physikalische Signale umsetzt und auch dafür sorgt, dass die physikalischen Signale zeitlich korrekt an die Speicherbausteine geschickt werden. Moderne Speicherverwaltungseinheiten sind dazu vorbereitet, ein sogenanntes ECC-RAM anzusteuern (RAM = *Random Access Memory*). Dabei wird aus jedem Datenwort (das meistens 32 Bit breit ist) eine spezielle Prüfsumme gebildet, die in zusätzlichen Speicherbausteinen abgelegt wird. Die Adresse bleibt dabei die gleiche, aber die Datenbreite des Speichers wird um die notwendige Anzahl an Prüfbits erhöht. Aufgrund der Datenbreite der Speicherbausteine wird eher zuviel bestückt. Typischerweise wird für 32 Bit breite Datenworte ein fünfter Chip mit 8 Bit Datenbreite verwendet, um die Prüfsumme zu speichern. Die Anzahl der Prüfbits ist aber kleiner als 8 Bit (typischerweise 7 Bit breit), so dass üblicherweise an jeder Speicheradresse mindestens ein Bit ungenutzt ist.

Der erste Datenspeicher 14 umfasst eine Vielzahl von Speicherworten 41, die für Schreib- und Lesevorgänge mittels der Adressleitungen 15 einzeln ausgewählt werden können. Jedes Speicherwort 41 umfasst ein Datenwort 42 mit 4 Byte für Nutzdaten und 1 Byte zur Speicherung eines Prüfworts 43 und eines Markierungsbits 44 (*Dirty-Bit*)*.* Mittels eines Lese-Schreibsignals RW teilt der erste Prozessor 11 dem ersten Datenspeicher 14 bei jedem Lese- oder Schreibvorgang mit, ob das Datenwort 42 gelesen oder geschrieben werden soll. Um die erforderliche Anzahl von Speicherworten 41 bereitzustellen, ist eine Matrix von Gruppen von Speicherbausteinen vorgesehen, in der bei einem Lese- oder Schreibzugriff die richtige Gruppe von Speicherbausteinen über ein *Chip*-*Select*-Signal CS ausgewählt wird.

Das Markierungsbit 44 wird dazu verwendet, den Status 'Schreibzugriff seit letzter Übertragung' zu kennzeichnen. Vorzugweise ist in den Speicherbausteinen noch ein ansonsten nicht verwendetes Bit frei, dass als Markierungsbit 44 verwendet werden kann. Andernfalls ist der erste Datenspeicher 14 zur Bereitstellung des Markierungsbits 44 um eine weitere Speicherscheibe erweitert.

Zu Beginn der Phase des Aufdatens sind alle Markierungsbits 44 in einem definierten zustand, beispielsweise 0. Zunächst wird ein erster Kopierdurchlauf 117 (siehe FIG 2) über den gesamten zu kopierenden Teil des ersten Datenspeichers 14 durchgeführt. Findet nun ein Schreibzugriff auf ein Speicherwort 41 statt, wird dies in dem Markierungsbit 44 als 1 gespeichert. Ein reiner Lesezugriff ändert das Markierungsbit 44 nicht. Auf den ersten Kopierdurchlauf 117 folgen weitere Kopierdurchläufe 130 (siehe FIG 2), in denen nur noch Nutzdaten aus denjenigen Speicherworten 41 kopiert werden, deren Markierungsbit 44 gesetzt ist. Auch während der weiteren Kopierdurchläufe 130 wird das Markierungsbit 44 immer dann gesetzt, wenn der zugriff auf das Speicherwort 41, zu dem das Markierungsbit 44 gehört, ein Schreibzugriff ist.

Über ein Ausgabe-Port 17 des ersten Controllers 10 wird signalisiert, ob zurzeit die Phase des Aufdatens läuft. Mittels einer Logikschaltung 50 (beispielsweise einem *FPGA = fieldprogrammable gate array*) wird eine Verknüpfung des Lese-Schreib-Signals RW mit einem Signal 51 herstellt, das anzeigt of die Phase des Aufdatens läuft, um das Markierungsbit 44 dann zu setzen, wenn ein Schreibzugriff während der Phase des Aufdatens erfolgt. Die Datenverarbeitungsvorrichtung 30 umfasst eine Speichervorrichtung 60, die den ersten Datenspeicher 14 und die Speicherverwaltungseinheit 12 und die Logikschaltung 50 aufweist.

Über ein Eingabe-Port 18 kann beim Kopieren der aktuelle zustand des Markierungsbits 44 des angesprochenen Speicherworts 41 abgefragt werden. Nach dem Kopieren der Nutzdaten des Speicherworts 14 zum zweiten Datenspeicher 14 wird das Markierungsbit 44 mittels der Logikschaltung 50 zurückgesetzt.

Umgekehrt kann das Markierungsbit 44 gelesen werden, um zu ermitteln, ob ein Speicherwort 41 im Rahmen der Phase des Aufdatens zu dem zweiten Datenspeicher 24 übertragen werden muss oder nicht. Dazu ist es vorteilhaft, in der Logikschaltung 50 einen Latch-Mechanismus zu vorzusehen, der den Inhalt des zuletzt gelesenen Markierungsbits 44 zwischenspeichert. Nach der Übertragung wird das Markierungsbit 44 wieder auf 0 zurückgesetzt. Dies kann auch implizit beim Lesen erfolgen.

Wenn nicht einzelne Speicherworte 41, sondern größere Speicherblöcke überwacht werden sollen, können n niedrigwertigste Adressleitungen 15' bei der Ermittlung des Zustands des Markierungsbits 44 vernachlässigt werden. Somit wird je Speicherblock der Größe 2ⁿ Byte nur ein Bit als Markierungsbit 44 im Speicher genutzt.

Die FIG 2 zeigt den Ablauf eines Verfahrens 100 zum Kopieren von Daten aus einem ersten Datenspeicher 14 in einen zweiten Datenspeicher 24. Das Verfahren 100 umfasst folgende Schritte. In einem ersten Schritt 110 wird ein erster Datenspeicher 14 bereitgestellt, in dessen Speicherworten 41 neben von Anwendungen nutzbaren Datenbits und einem oder mehreren eventuellen Prüfbits ein Markierungsbit 44 vorgesehen ist. In einem zweiten Schritt wird mindestens ein Schreibzugriff 120 auf mindestens ein Speicherwort 41 des ersten Datenspeichers 14 durchgeführt. Dabei wird das Markierungsbit 44 des Speicherworts 41, auf das der Schreibzugriff erfolgt, auf den zweiten Binärwert gesetzt. In einem dritten Schritt werden alle Datenworte 42 der Speicherworte 41 des ersten Datenspeichers 14, in denen das Markierungsbit 44 den zweiten Binärwert aufweist, in den zweiten Datenspeicher 24 kopiert. Hierbei wird das Markierungsbit 44 jedes Speicherworts 41, auf das der Kopierzugriff erfolgt, auf den ersten Binärwert gesetzt, der zu dem zweiten Binärwert invers ist. Dabei wird gewährleistet, dass zwischen dem Kopieren des Datenworts 42 des Speicherworts 41, auf das der Kopierzugriff erfolgt, und dem Setzen des Markierungsbits 44 auf den ersten Binärwert kein Schreibzugriff erfolgt. In dem Verfahren 100 wird der zweite Verfahrensschritt zeitgleich mit dem dritten Verfahrensschritt durchgeführt.

Der dritte Verfahrensschritt wird wiederholt, bis zu Beginn des dritten Verfahrensschritts kein Markierungsbit 44 eines Speicherworts 41 des ersten Datenspeichers 14 mehr den zweiten Binärwert aufweist.

Eine optionale Weiterbildung sieht vor, dass vor dem Durchführen eines ersten Schreibzugriffs 120 folgende Schritte durchgeführt werden: Setzen 115 des Markierungsbits 44 aller Speicherworte 41 des ersten Datenspeichers 14 auf den ersten Binärwert und Kopieren 117 aller Datenworte 42 der Speicherworte 41 des ersten Datenspeichers 14, in denen das Markierungsbit 44 den ersten Binärwert aufweist, in den zweiten Datenspeicher 24.

Das vorgeschlagene Verfahren 100 hat folgende Vorteile:

Das Schreiben des Markierungsbits 44 erfolgt ohne Zeitverlust mit der Geschwindigkeit der Anbindung des ersten Datenspeichers 14 and den ersten Prozessor 11, weil die Berechnung in Hardware durchgeführt wird.

Ein Rücklesen des Markierungsbits 44 zur Berücksichtigung für einen folgenden Schreib- oder Lesezugriff kann gleichzeitig mit dem Lesen des Datenwortes 42 in einem vorhergehenden Schreib- oder Lesezugriff stattfinden. Zur zwischenspeicherung des Markierungsbits 44 bis zu Durchführung des Schreiboder Lesezugriffs, an dem es berücksichtigt wird, kann das Markierungsbit 44 in einer internen oder externen Schaltung (beispielsweise einem Latch) zwischengespeichert werden.

In der Anwendungssoftware 19 müssen keine speziellen zugriffsfunktionen verwendet werden, weil das Schreiben des Markierungsbits 44 für die Anwendungssoftware 19 vollkommen transparent ist. Mit 'Anwendungssoftware' wird hier Software bezeichnet, welche auf dem ersten Prozessor 11 läuft. Dazu gehören auch fast alle Teile von Betriebssystemsoftware (einschließlich evtl. Middleware), jedoch nicht eventuell vorhandene Firmware der Speicherverwaltungseinheit 12.

Das Verfahren 100 kann auf beliebige Speicherarten angewendet werden, ohne dass aus Sicht des ersten Prozessors 11 der physikalische Aufbau des ersten Datenspeichers 14 berücksichtigt werden muss.

Die zur Ausführung des Verfahrens 100 erforderlichen Maßnahmen lassen sich durch eine externe oder interne Ergänzung der Hardware eines beliebigen Standard-Controllers 10 verwirklichen. Die Ergänzung kann in einem FPGA 50 bestehen, der schaltungstechnisch zwischen dem ersten Controller 10 und dem ersten Datenspeicher 14 angeordnet ist.

Wenn ein ohnehin vorhandenes Speicherbit (beispielsweise in einem ECC-RAM) für das Markierungsbit 44 genutzt werden kann, wird für die Durchführung des Verfahrens 100 außer dem ohnehin vorhandenen Speicherplatz kein zusätzlicher physikalischer Speicherplatz benötigt.

Die Größe des Speicherbereichs, der mit einem einzelnen Markierungsbit 44 überwacht wird, lässt sich einstellen, indem Adressleitungen 15 für niedrigwertige Adressbits in der Logikschaltung 50 unberücksichtigt bleiben. Anforderungsabhängig kann die Größe des Speicherbereichs für verschiedene Speicherbereiche unterschiedlich gewählt werden.

Die FIG 3 zeigt ein Verfahren 200 zum Markieren von beschriebenen Speicherworten 120, das folgende Schritte umfasst: In einem ersten Schritt wird ein erster Datenspeicher 14 bereitgestellt, in dessen Speicherworten 41 außer Datenbits, die durch Anwendungen 19 genutzt werden können, und einem oder mehreren eventuellen Prüfbits ein Markierungsbit 44 vorgesehen ist. In einem zweiten Schritt wird das Markierungsbit 120 aller Speicherworte 41 des ersten Datenspeichers 14 auf einen ersten Binärwert gesetzt. In einem dritten Schritt wird mindestens ein Schreibzugriff 120 auf mindestens ein Speicherwort 41 des ersten Datenspeichers 14 durchgeführt, wobei das Markierungsbit 44 des Speicherworts 41, auf das der Schreibzugriff 120 erfolgt, auf einen zweiten Binärwert gesetzt wird, der zu dem ersten Binärwert invers ist.

### Bezugszeichenliste

- 10: erster Controller
- 11: erster Prozessor
- 12: Speicherverwaltungseinheit
- 13: erster Busanschluss
- 14: erster Datenspeicher
- 15: Adressleitungen
- 15': niedrigstwertige Adressleitungen
- 16: Datenleitung
- 17: Ausgabe-Port zur Anzeige der Aufdatenphase
- 18: Eingabe-Port zur Abfrage des Markierungsbits
- 19: Anwendungssoftware
- 20: zweiter Controller
- 23: zweiter Busanschluss
- 24: zweiter Datenspeicher
- 30: erste Datenverarbeitungsvorrichtung
- 30': zweite Datenverarbeitungsvorrichtung; Datensenke
- 41: Speicherwort
- 42: Datenwort
- 43: Prüfwort
- 44: Markierungsbit (*Dirty-Bit*)
- 30: erste Verarbeitungseinheit
- 30': zweite Verarbeitungseinheit
- 50: Logikschaltung
- 60: Speichervorrichtung
- 100: Verfahren zum Kopieren von Daten
- 110: Bereitstellen eines ersten Datenspeichers
- 115: Setzen des Markierungsbits aller Speicherworte
- 117: Kopieren aller Datenworte
- 120: Durchführen mindestens eines Schreibzugriffs
- 130: Kopieren aller Datenworte des ersten Datenspeichers
- 200: Verfahren zum Markieren von beschriebenen Speicherworten
- CS: Chip-Select-Signal
- RW: Lese-Schreib-Signal

## Patentansprüche

1. Verfahren (100) zum Kopieren von Daten aus einem ersten Datenspeicher (14) in eine Datensenke (30'),
**dadurch gekennzeichnet, dass**
das Verfahren (100) folgende drei Schritte umfasst, wobei der zweite Verfahrensschritt zeitgleich mit dem dritten Verfahrensschritt durchgeführt wird und der dritte Verfahrensschritt wiederholt wird, bis zu Beginn des dritten Verfahrensschritts kein Markierungsbit (44) eines Speicherworts (41) des ersten Datenspeichers (14) mehr einen zweiten Binärwert aufweist:
- Bereitstellen (110) eines ersten Datenspeichers (14), in dessen Speicherworten (41) neben von Anwendungen nutzbaren Datenbits und einem oder mehreren eventuellen Prüfbits ein Markierungsbit (44) vorgesehen ist;
- Durchführen mindestens eines Schreibzugriffs (120) auf mindestens ein Speicherwort (41) des ersten Datenspeichers (14), wobei das Markierungsbit (44) des Speicherworts (41), auf das der Schreibzugriff (120) erfolgt, auf den zweiten Binärwert gesetzt wird; und
- Kopieren (130) aller Datenworte (42) der Speicherworte (41) des ersten Datenspeichers (14), in denen das Markierungsbit (44) den zweiten Binärwert aufweist, in die Datensenke (30'), wobei das Markierungsbit (44) jedes Speicherworts (41), auf das der Kopierzugriff erfolgt, auf einen ersten Binärwert gesetzt wird, der zu dem zweiten Binärwert invers ist, wobei gewährleistet ist, dass zwischen dem Kopieren des Datenworts (42) des Speicherworts (41), auf das der Kopierzugriff erfolgt, und dem Setzen des Markierungsbits (44) auf den ersten Binärwert kein Schreibzugriff erfolgt.

2. Verfahren (100) nach Anspruch 1, **dadurch gekennzeichnet, dass** vor dem Durchführen eines ersten Schreibzugriffs (120) folgender Schritt durchgeführt wird:
- Kopieren aller Datenworte (42) der Speicherworte (41) des ersten Datenspeichers (14) ohne Rücksicht auf den Zustand der Markierungsbits (44).

3. Verfahren (100) nach Anspruch 1, **dadurch gekennzeichnet, dass** vor dem Durchführen eines ersten Schreibzugriffs (120) folgender Schritt durchgeführt wird:
- Setzen (115) des Markierungsbits (44) aller Speicherworte (41) des ersten Datenspeichers (14) auf den zweiten Binärwert.

4. Verfahren (100) nach Anspruch 1, **dadurch gekennzeichnet, dass** vor dem Durchführen eines ersten Schreibzugriffs (120) folgende Schritte durchgeführt werden:
- Setzen (115) des Markierungsbits (44) aller Speicherworte (41) des ersten Datenspeichers (14) auf den ersten Binärwert; und
- Kopieren (117) aller Datenworte (42) der Speicherworte (41) des ersten Datenspeichers (14), in denen das Markierungsbit (44) den ersten Binärwert aufweist, in die Datensenke (30').

5. Verfahren (200) zum Markieren von beschriebenen Speicherworten (120),
**dadurch gekennzeichnet, dass**
das Verfahren (200) folgende drei Schritte umfasst:
- Bereitstellen (110) eines ersten Datenspeichers (14), in dessen Speicherworten (41) neben von Anwendungen (19) nutzbaren Datenbits und einem oder mehreren eventuellen Prüfbits ein Markierungsbit (44) vorgesehen ist;
- Setzen (115) des Markierungsbits (44) aller Speicherworte (41) des ersten Datenspeichers (14) auf einen ersten Binärwert; und
- Durchführen mindestens eines Schreibzugriffs (120) auf mindestens ein Speicherwort (41) des ersten Datenspeichers (14), wobei das Markierungsbit (44) des Speicherworts (41), auf das der Schreibzugriff (120) erfolgt, auf einen zweiten Binärwert gesetzt wird, der zu dem ersten Binärwert invers ist.

6. Verfahren (100) nach einem der Ansprüche 1 bis 5, **dadurch gekennzeichnet, dass** der erste Datenspeicher (14) Datenblöcke umfasst, wobei je Datenblock für alle Speicherworte (41) des jeweiligen Datenblocks ein gemeinsames Markierungsbit (44) vorgesehen ist.

7. Verfahren (100) nach einem der Ansprüche 1 bis 6, **dadurch gekennzeichnet, dass** eine Verknüpfung eines Lese-Schreib-Signals (RW) mit einem Signal (51) durchgeführt wird, das anzeigt, ob gerade ein Aufdaten durchgeführt wird.

8. Logikschaltung (50),
**dadurch gekennzeichnet, dass**
die Logikschaltung (50) zur Durchführung des Verfahrens (100) nach einem der Ansprüche 1 bis 7 vorbereitet ist.

9. Speichervorrichtung (60), wobei die Speichervorrichtung (60) einen ersten Datenspeicher (14) und eine Speicherverwaltungseinheit (12) umfasst,
**dadurch gekennzeichnet, dass**
die Speichervorrichtung (60) auch eine Logikschaltung (50) gemäß Anspruch 8 umfasst.

10. Datenverarbeitungsvorrichtung (30), wobei die Datenverarbeitungsvorrichtung (30) einen ersten Prozessor (11) umfasst,
**dadurch gekennzeichnet, dass**
die Datenverarbeitungsvorrichtung (30) auch eine Speichervorrichtung (60) gemäß Anspruch 9 umfasst.
